(19) **Europäisches Patentamt**
**European Patent Office**
**Office européen des brevets**

(11) **EP 2 347 588 B1**

(12) **FASCICULE DE BREVET EUROPEEN**

(45) Date de publication et mention
de la délivrance du brevet:
**27.06.2012 Bulletin 2012/26**

(21) Numéro de dépôt: **09783571.4**

(22) Date de dépôt: **29.09.2009**

(51) Int Cl.:
*H04N 21/234* (2011.01)   *H04N 21/236* (2011.01)
*H04N 21/44* (2011.01)    *H04N 21/8547* (2011.01)
*H04H 20/10* (2008.01)    *H04H 20/18* (2008.01)
*H04H 20/67* (2008.01)

(86) Numéro de dépôt international:
**PCT/EP2009/062646**

(87) Numéro de publication internationale:
**WO 2010/043498 (22.04.2010 Gazette 2010/16)**

(54) **HORODATAGE D' UN FLUX DE DONNEES DANS UN RESEAU A FREQUENCE UNIQUE**

ZEITSTEMPELN EINES DATENSTROMS IN EINEM EINFREQUENZNETZ

TIMESTAMPING A DATA STREAM IN A SINGLE FREQUENCY NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **17.10.2008 FR 0857099**

(43) Date de publication de la demande:
**27.07.2011 Bulletin 2011/30**

(73) Titulaire: **TDF**
**92120 Montrouge (FR)**

(72) Inventeur: **DUPAIN, Pascal**
**F-35131 Pont Pean (FR)**

(74) Mandataire: **Le Noane, Karine**
**Cabinet Vidon**
**Technopôle Atalante**
**16B, rue de Jouanet**
**35703 Rennes Cedex 7 (FR)**

(56) Documents cités:
**WO-A-2007/050217    FR-A- 2 902 591**

**Description**

## 1. DOMAINE DE L'INVENTION

Le domaine de l'invention est celui de la transmission et de la diffusion d'informations numériques.

Plus précisément, l'invention concerne une technique d'horodatage d'un flux de données numériques.

L'invention s'applique notamment, mais non exclusivement, à un flux de données numériques conforme à l'une des normes de radiodiffusion suivantes : DVB-T (« Digital Video Broadcasting - Terrestrial » en anglais, pour « diffusion vidéo numérique terrestre »), DVB-H (« Digital Video Broadcasting - Handheld » en anglais, pour « diffusion vidéo numérique - portable), DVB-SH (« Digital Video Broadcasting - Satellite services to Handhelds » en anglais, pour « diffusion vidéo numérique - services par satellite pour portables »), DTMB (« Digital Terrestrial Multimedia Broadcast » en anglais, pour « diffusion multimédia numérique terrestre »), CMMB (« China Multimedia Mobile Broadcasting » en anglais, pour « diffusion multimédia pour mobile en Chine), etc.

Dans un mode de réalisation préférentiel, mais non exclusif, cette technique d'horodatage s'inscrit dans le contexte de la norme ISO/IEC 13818-1 relative aux multiplex MPEG-TS ("Motion Picture Expert Group - Transport Stream" en anglais) et aux réseaux SFN ("Single Frequency Network" en anglais, pour "réseau à fréquence unique").

La technique d'horodatage de l'invention a de nombreuses applications. Elle peut par exemple être utilisée pour horodater un flux de données principal et au moins une partie (c'est-à-dire une composante) d'un flux de données secondaire (aussi appelé flux de contribution), et permettre ainsi l'insertion de cette partie de flux secondaire dans le flux principal.

On rappelle qu'une composante correspond par exemple à un élément d'un signal composite, tel que la partie audio ou la partie vidéo d'un signal multimédia, et qu'un ensemble de composantes forme par exemple un service.

La technique d'horodatage de l'invention peut également s'appliquer dans d'autres situations, telles que par exemple un changement de débit déterministe d'un flux.

## 2. ARRIÈRE-PLAN TECHNOLOGIQUE

On s'attache plus particulièrement dans la suite de ce document à décrire la problématique existante dans le domaine des réseaux de diffusion de télévision numérique terrestre, à laquelle ont été confrontés les inventeurs de la présente demande de brevet. L'invention ne se limite bien sûr pas à ce domaine particulier d'application, mais présente un intérêt pour toute technique de transmission ou de diffusion d'informations devant faire face à une problématique proche ou similaire.

Des réseaux de diffusion de télévision numérique terrestre (encore appelée TNT), mettant en oeuvre la norme DVB-T, sont aujourd'hui déployés en France, en Europe, et dans plusieurs autres Etats du monde. Dans la grande majorité, ces réseaux sont de type MFN (« Multi Frequency Network » en anglais, pour « réseau multi fréquences »), ce qui signifie que les différents émetteurs d'un tel réseau fonctionnent à des fréquences distinctes. A l'inverse, dans certaines zones géographiques, les réseaux sont de type SFN (« Single Frequency Network » en anglais, pour « réseau à fréquence unique » ; on parle aussi de réseau isochrone), ce qui signifie que les différents émetteurs doivent être synchronisés en temps et en fréquence.

En effet, le principe de fonctionnement de tels réseaux SFN peut consister à émettre un même signal depuis au moins deux sites géographiques distincts sur chacun desquels est implanté un émetteur. L'objectif recherché est alors d'additionner la contribution de ces deux signaux en réception, ce qui nécessite qu'ils soient reçus au même instant, dans un intervalle de garde qui est fonction du profil de modulation et proportionnel à la largeur du temps symbole, et à la même fréquence, pour éviter qu'ils ne se perturbent l'un l'autre. En fonction de l'éloignement géographique du récepteur à chacun des deux émetteurs, il est donc parfois nécessaire de tenir compte des temps de trajets différents des signaux, et plus généralement du canal de propagation et des perturbations qu'il est susceptible d'introduire.

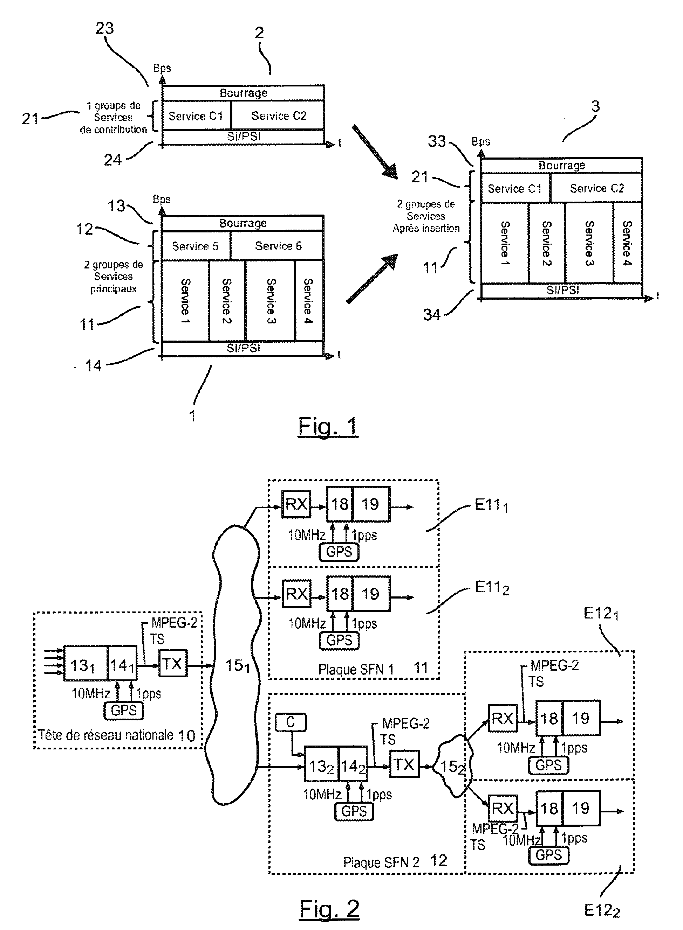

Dans un réseau SFN, tel qu'illustré par exemple par la **figure 2**, avec une tête de réseau nationale 10 et des plaques SFN1 11 et SFN2 12, les émetteurs E111, E112 (plaque SFN1), E 121 et E122 (plaque SFN2) de chaque plaque sont synchrones aux niveaux temporel et fréquentiel, ce qui signifie qu'ils doivent émettre un même signal modulé au même instant. Par exemple, ce signal modulé peut être un signal numérique formaté selon la norme 13818-1, appelé MPEG-TS.

Dans la tête de réseau nationale 10, le flux MPEG-TS de données à transmettre est construit par un multiplexeur $13_1$, qui réalise la mise en trame des données. Après multiplexage, les données sont traitées par un adaptateur SFN $14_1$, qui réalise le marquage temporel des trames pour assurer la synchronisation des émetteurs. L'adaptateur SFN $14_1$ est le pendant, dans la tête de réseau nationale 10, de l'équipement de synchronisation 18 compris dans chaque plaque SFN 11 ou 12. En sortie de l'adaptateur SFN $14_1$, le flux de données est donc de type MPEG-TS : il est alors transmis par un adaptateur réseau TX (« TX Network Adapter » en anglais), et véhiculé, par l'intermédiaire d'un réseau de distribution $15_1$ (par exemple un réseau de distribution par satellite), jusqu'aux plaques SFN 11 ou 12.

Plus précisément, le marquage temporel réalisé par l'adaptateur SFN $14_1$ consiste (voir la norme ETSI TS 101 191) :

- d'une part, à construire des méga-trames (encore appelées super-trames), correspondant chacune à 8 trames DVB-T en mode 8K, ou à 32 trames DVB-T en mode 2K, et
- d'autre part, à insérer en un endroit quelconque de chacune de ces méga-trames, un paquet d'initialisation de méga-trame, encore appelé paquet MIP (pour « Mega-frame Initialisation Packet » en anglais).

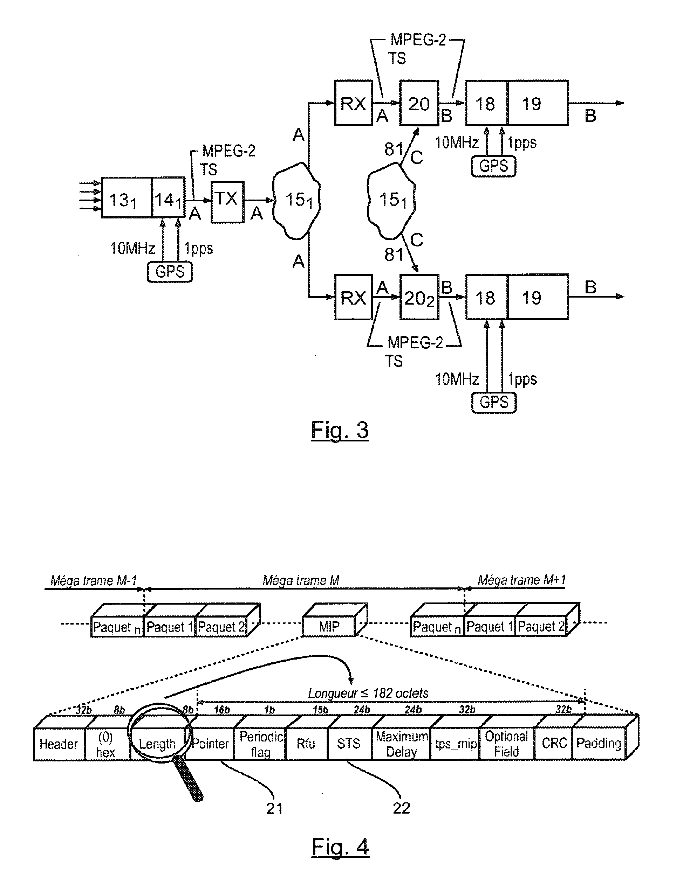

Le paquet MIP de la méga-trame d'indice M, noté $MIP_M$, est identifié par son propre PID=0x15 (pour « Packet Identifier » en anglais, soit « identifiant de paquet ») et comprend notamment (comme illustré sur la **figure 4**) :

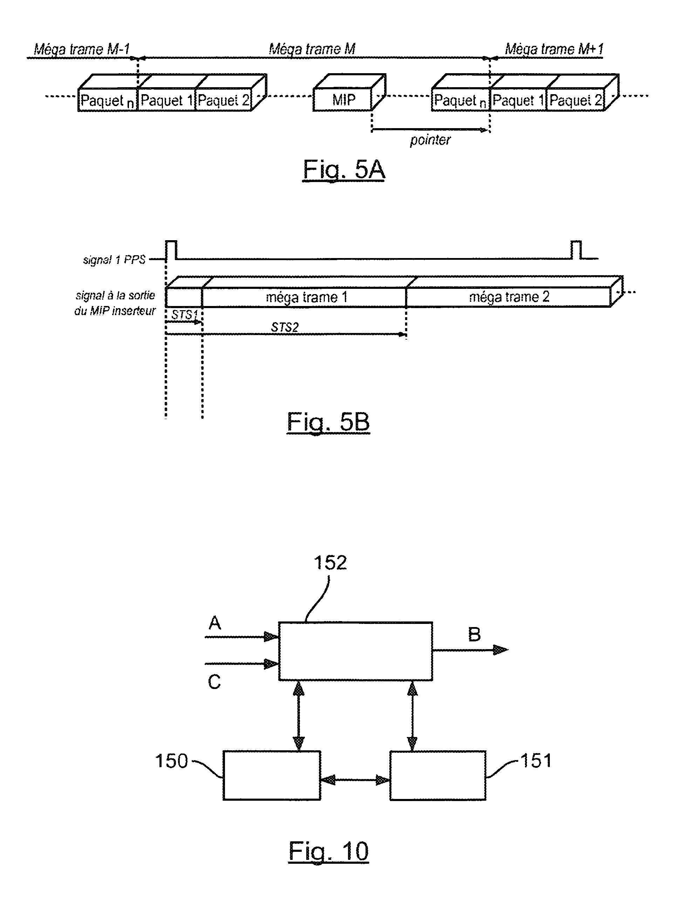

- un mot de deux octets appelé « pointer » 41, qui donne le nombre de paquets de données entre le paquet MIP courant et le premier paquet de la méga-trame suivante (comme illustré sur la **figure 5A**) ;
- un mot de trois octets appelé STS (« Synchronisation_time_stamp » en anglais) 42, qui donne le nombre de périodes de 10 MHz entre la dernière impulsion 1 PPS de référence précédant le début de la méga-trame suivante d'indice M+1 et le début de cette méga-trame suivante d'indice M+1 (ce début étant identifié par le premier bit du premier paquet de cette méga-trame suivante) (comme illustré sur la **figure 5B**).

La technique actuelle pour assurer la synchronisation des émetteurs dans un tel réseau SFN repose sur des dispositifs de mesure temporelle différentielle de signaux, permettant de mesurer l'écart entre les signaux des différents émetteurs, et de vérifier la stabilité du réseau, après qu'il ait été correctement réglé (en absolu).

Dans les plaques SFN, les données à diffuser par chacun des émetteurs sont reçues sous la forme d'un flux de transport de type MPEG-TS, issu d'un récepteur RX jouant également le rôle d'adaptateur de réseau (« RX Network Adapter » en anglais). La synchronisation des signaux du réseau SFN, en sortie des modulateurs 19 de chaque émetteur E111, E112, E121 et E122, est réalisée à partir de tables prédéterminées, dites tables MIP, par un équipement de synchronisation 18, permettant aux différents modulateurs 19 de réaligner les trames constituant lesdits signaux par rapport à une même référence externe unique, pouvant être n'importe quelle référence de fréquence commune disponible, par exemple de type GPS (« Global Positioning System » en anglais). A cet effet, l'adaptateur SFN $14_1$, ainsi que l'équipement de synchronisation 18 de chaque émetteur, sont chacun alimentés par deux signaux de référence fréquentielle et temporelle, par exemple un signal correspondant à une impulsion par seconde (ou « 1 PPS », pour « 1 Pulse Per Second » en anglais) et un signal à 10MHz résultant du 1 PPS. Ces signaux peuvent être issus de tout système de référence fiable, et par exemple du système de positionnement mondial GPS.

La diffusion de programmes locaux ou régionaux suppose un traitement spécifique, qui est mis en oeuvre de façon différente en fonction du type de réseau. Pour un réseau de type MFN, ceci est relativement aisé, du fait que plusieurs fréquences sont utilisées. En revanche, pour un réseau de type SFN, une telle diffusion nécessite l'insertion de données locales ou régionales, notées composantes C dans la suite de la description, en amont d'un ou plusieurs émetteurs d'une plaque SFN. Cette insertion doit être réalisée de telle sorte que la caractéristique SFN du réseau soit conservée, c'est à dire de façon que l'ensemble des signaux en sortie de chaque modulateur DVB-T de tous les émetteurs d'une même plaque soient identiques.

Selon une première technique actuelle, illustrée sur la figure 2, l'insertion de données locales ou régionales en amont d'un ou plusieurs émetteurs dans une plaque SFN nécessite une modification de l'architecture de la plaque SFN d'origine, pour pouvoir conserver un réseau SFN. Cette modification fondamentale de la plaque SFN nécessite de remultiplexer (avec un multiplexeur $13_2$) le flux MPEG-TS après insertion des composantes C, puis de repasser ce flux multiplexé au travers d'un adaptateur SFN $14_2$ afin de remplacer les paquets MIP (qui ne sont plus valables après remultiplexage du flux) et enfin d'ajouter un autre noeud $15_2$ qui redistribue à chacun des émetteurs le nouveau signal dans lequel la ou les composantes C ont été insérées. Dans la figure 2, la plaque SFN 1 11 illustre un exemple d'architecture de plaque SFN d'origine, et la plaque SFN2 12 illustre un exemple d'architecture de plaque SFN après modification.

Un inconvénient majeur de cette première technique de l'art antérieur est qu'elle entraîne une forte augmentation de la complexité et du coût de diffusion, en raison notamment de l'ajout d'un multiplexeur $13_2$, d'un adaptateur SFN $14_2$ et d'un noeud de redistribution $15_2$.

Afin de pallier cet inconvénient, une deuxième technique d'insertion de données locales ou régionales (C), dans un flux numérique d'origine (A), en amont d'un ou plusieurs émetteurs dans une plaque SFN est proposée dans la demande de brevet FR2902591. Le flux résultant est référencé B. Cette deuxième technique est brièvement présentée ci-dessous en relation avec la **figure 3**. Les éléments identiques sur les figures 2 et 3 sont désignés par une même référence numérique. Dans l'exemple de la figure 3, la composante C à insérer est issue de la conversion d'un flux secondaire MPEG-TS 81 diffusé par un réseau de diffusion 81. Dans un mode de réalisation particulier, il est proposé d'utiliser des informations de signalisation transportées par le flux numérique d'origine, formaté selon la norme MPEG2-TS, pour garantir la synchronisation de l'insertion effectuée dans un dispositif d'insertion 20. Les informations de signalisation utilisées sont des tables d'allocation de programmes (ou tables PAT, pour « Program Allocation Table » en anglais) et des tables de date et d'heure (ou tables « TDT », pour « Time and Date Table » en anglais). Ces tables sont émises à intervalles réguliers, par exemple en moyenne une table PAT toutes les 0,1 seconde et une table TDT toutes les 30 secondes. Les tables TDT peuvent être utilisées comme référence d'horodatage des paquets des tables PAT, qui servent alors elles-mêmes de référence pour la synchronisation de l'insertion de la composante. Il est précisé que le fait d'utiliser des tables PAT plutôt que d'utiliser directement des tables TDT permet d'obtenir une granularité d'horodatage (et donc d'insertion) plus fine, car la récurrence généralement utilisée pour les tables TDT est de 30 secondes, alors qu'elle est de 0,1 seconde (c'est-à-dire 100 ms) pour les tables PAT.

Cependant, il s'avère que cette deuxième technique n'est pas optimale. En effet, la précision temporelle offerte par la technique d'horodatage basée sur les tables PAT n'est pas suffisante : 100 ms (c'est-à-dire $10^{-1}$s) alors que l'on souhaiterait avoir plutôt une précision à 100 ns près (c'est-à-dire $10^{-7}$s). En outre, cette technique d'horodatage est basée sur l'hypothèse que la table PAT a une récurrence de 100 ms, ce qui n'est pas toujours le cas (la valeur de 100 ms est plutôt une valeur moyenne).

## 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant de réaliser un horodatage précis d'un flux de données numériques (par exemple un flux MPEG-TS standard), cet horodatage devant être suffisamment précis notamment pour perturber le moins possible l'ordonnancement des paquets du flux (écart entre les paquets, débit...), par exemple dans le cas de réseaux DVB-H ou DVB-SH.

Un objectif complémentaire d'au moins un mode de réalisation de l'invention est de fournir une telle technique permettant un horodatage déterministe, pouvant ainsi être utilisée en environnement SFN (en assurant que les horodatages locaux effectués dans divers équipements réalisent tous la même opération au même moment).

Au moins un mode de réalisation de l'invention a également pour objectif de fournir une telle technique d'horodatage basée sur des éléments non propriétaires et permettant une implémentation peu coûteuse.

Un autre objectif d'au moins un mode de réalisation de l'invention est de fournir une telle technique d'horodatage pouvant fonctionner dans un contexte d'insertion d'au moins une partie d'un flux de données secondaire (c'est-à-dire au moins une composante de ce flux secondaire) dans un flux de données principal (par exemple dans un contexte de remultiplexage local).

Un objectif complémentaire d'au moins un mode de réalisation de l'invention est de fournir une telle technique d'horodatage permettant, dans le contexte d'insertion précité, au flux principal de rester conforme au standard de diffusion dans lequel il se trouve avant l'opération d'insertion (par exemple DVB-T, DVB-H, DVB-SH, DTMB, CMMB, ou toute autre norme de télédiffusion basée sur l'utilisation du flux MPEG-TS).

Un objectif complémentaire d'au moins un mode de réalisation de l'invention est de fournir une telle technique d'horodatage supportant, dans le contexte d'insertion précité, le non synchronisme du flux principal et du flux secondaire (ces derniers pouvant provenir d'interface et de réseaux de distribution différents, et étant alors non synchronisés).

## 4. EXPOSÉ DE L'INVENTION

Dans un mode de réalisation particulier de l'invention, il est proposé un procédé d'horodatage d'un flux de données organisé en paquets successifs eux-mêmes organisés en au moins une méga-trame, chaque méga-trame comprenant un paquet d'initialisation de méga-trame (MIP).

Selon l'invention, un tel procédé comprend les étapes suivantes, pour chaque paquet dudit flux :

- détermination de la durée dudit paquet, à partir d'une taille déterminée dudit paquet et d'un débit déterminé dudit flux donné ;
- si ledit paquet est un paquet transportant une table de date et heure (table TDT), obtention d'une première information temporelle (UTC_time) contenue dans ladite table de date et heure (table TDT) ;
- si ledit paquet est un premier paquet d'une méga-trame, obtention d'une seconde information temporelle (STS) contenue dans un paquet d'initialisation de méga-trame (MIP) préalablement reçu ;
- horodatage dudit paquet en fonction de la durée dudit paquet et desdites première et seconde informations temporelles.

Ainsi, dans ce mode de réalisation particulier, l'invention repose sur une approche tout à fait nouvelle et inventive consistant à utiliser les informations temporelles (STS) contenues dans les paquets d'initialisation de méga-trame. Il s'agit donc d'une utilisation détournée et non évidente des paquets d'initialisation de méga-trame, ces derniers étant pour mémoire conçus pour permettre la synchronisation des émetteurs.

On notera que plusieurs désignations existent pour les paquets d'initialisation de méga-trame : paquets MIP dans les normes DVB-T, DVB-H et DVB-SH, paquets SHIP dans la norme DVB-SH, ou encore paquets SIP dans les normes DTMB et CMMB. Dans l'ensemble de la présente description, le terme « paquet MIP » doit être compris comme désignant de manière générique un paquet d'initialisation de méga-trame et englobe donc les autres désignations précitées (SHIP, SIP) ou toute autre désignation équivalente.

De façon avantageuse, ladite étape d'horodatage dudit paquet en fonction de la durée dudit paquet et desdites première et seconde informations temporelles comprend les étapes suivantes :

- incrémentation d'un premier compteur temporel, permettant de compter des fractions de seconde (SECOND_FRAC), avec la durée déterminée dudit paquet, pour obtenir une valeur incrémentée du premier compteur ;
- si ladite valeur incrémentée du premier compteur est supérieure ou égale à une valeur maximale prédéterminée, réinitialisation du premier compteur avec une nouvelle valeur courante égale à ladite valeur incrémentée moins ladite valeur maximale prédéterminée, et incrémentation d'une unité d'un second compteur temporel (SECOND_ INT), permettant de compter des secondes ;
- si ledit paquet est un paquet transportant une table de date et heure (table TDT), réinitialisation du second compteur temporel à une nouvelle valeur courante fonction de ladite première information temporelle (UTC_time) contenue dans ladite table de date et heure ;
- si ledit paquet est un premier paquet d'une méga-trame, réinitialisation du premier compteur temporel à une nouvelle valeur courante fonction de ladite seconde information temporelle (STS) contenue dans ledit paquet d'initialisation de méga-trame (MIP) préalablement reçu ;
- horodatage dudit paquet en fonction de la valeur courante des premier et second compteurs.

Ce mode de réalisation est simple à mettre en oeuvre puisqu'il ne nécessite que deux compteurs (permettant de compter respectivement des fractions de seconde et des secondes).

Avantageusement, ladite seconde information temporelle est contenue dans un champ « Synchronisation_ time_stamp » (STS) dudit paquet d'initialisation de méga-trame (MIP).

De cette façon, on obtient une précision d'horodatage de 100 ns, beaucoup plus fine ($10^6$ fois plus) que celle (100 ms) de l'art antérieur discuté ci-dessus. En effet, l'information temporelle STS exprime une durée en nombre de périodes de 10 MHz (c'est-à-dire en nombre de périodes de 100 ns).

Selon une caractéristique avantageuse, ledit flux est un flux devant être diffusé par au moins un émetteur d'un réseau de diffusion de type SFN, dans lequel chacun desdits émetteurs utilise une même fréquence d'émission des données du flux résultant.

La technique proposée peut être mise en oeuvre dans un dispositif d'horodatage (pouvant aussi remplir la fonction d'insertion de flux), compris dans chaque émetteur.

Avantageusement, ledit flux de données est conforme à une norme de radiodiffusion appartenant au groupe comprenant les normes DVB-T, DVB-H, DVB-SH, DTMB et CMMB.

Selon une caractéristique avantageuse, ledit premier compteur est incrémenté au rythme d'une horloge à 10 MHz, de façon à compter des dixièmes de microseconde, et en ce que ladite valeur maximale prédéterminée est égale à $10^7$.

Dans un autre mode de réalisation, l'invention concerne un produit programme d'ordinateur téléchargeable depuis un réseau de communication et/ou enregistré sur un support lisible par ordinateur et/ou exécutable par un processeur. Ce produit programme d'ordinateur comprend des instructions de code de programme pour la mise en oeuvre du procédé d'horodatage précité (dans l'un quelconque de ses différents modes de réalisation), lorsque ledit programme est exécuté sur un ordinateur.

Dans un autre mode de réalisation, l'invention concerne un moyen de stockage, éventuellement totalement ou partiellement amovible, lisible par un ordinateur, stockant un jeu d'instructions exécutables par ledit ordinateur pour mettre en oeuvre le procédé d'horodatage précité (dans l'un quelconque de ses différents modes de réalisation).

Dans un autre mode de réalisation, l'invention concerne un dispositif d'horodatage d'un flux de données organisé en paquets successifs eux-mêmes organisés en au moins une méga-trame, chaque méga-trame comprenant un paquet d'initialisation de méga-trame (MIP).

Selon l'invention, un tel dispositif comprend :

- des moyens de détermination de la durée d'un paquet dudit flux, à partir d'une taille déterminée dudit paquet et d'un débit déterminé dudit flux donné ;
- des moyens de détection du type dudit paquet ;
- des premiers moyens d'obtention, activés si lesdits moyens de détection détectent que ledit paquet est un paquet transportant une table de date et heure (table TDT), permettant d'obtenir une première information temporelle (UTC_time) contenue dans ladite table de date et heure (table TDT) ;

- des seconds moyens d'obtention, activés si lesdits moyens de détection détectent que ledit paquet est un premier paquet d'une méga-trame, permettant d'obtenir une seconde information temporelle (STS) contenue dans un paquet d'initialisation de méga-trame (MIP) préalablement reçu ;
- des moyens d'horodatage dudit paquet en fonction de la durée dudit paquet et desdites première et seconde informations temporelles.

Avantageusement, lesdits moyens d'horodatage dudit paquet en fonction de la durée dudit paquet et desdites première et seconde informations temporelles comprend :

- des moyens d'incrémentation d'un premier compteur temporel, permettant de compter des fractions de seconde (SECOND_FRAC), avec la durée déterminée dudit paquet, pour obtenir une valeur incrémentée du premier compteur ;
- des moyens de comparaison de ladite valeur incrémentée du premier compteur avec une valeur maximale prédéterminée ;
- les moyens suivants, activés si lesdits moyens de comparaison indiquent que ladite valeur incrémentée du premier compteur est supérieure ou égale à ladite valeur maximale prédéterminée :

  * des moyens de réinitialisation du premier compteur avec une nouvelle valeur courante égale à ladite valeur incrémentée moins ladite valeur maximale prédéterminée,
  * des moyens d'incrémentation d'une unité d'un second compteur temporel (SECOND_INT), permettant de compter des secondes ;

- des premiers moyens de réinitialisation, activés si lesdits moyens de détection détectent que ledit paquet est un paquet transportant une table de date et heure (table TDT), permettant de réinitialiser le second compteur temporel à une nouvelle valeur courante fonction de ladite première information temporelle (UTC_time) contenue dans ladite table de date et heure ;
- des seconds moyens de réinitialisation, activés si lesdits moyens de détection détectent que ledit paquet est un premier paquet d'une méga-trame, permettant de réinitialiser le premier compteur temporel à une nouvelle valeur courante fonction de ladite seconde information temporelle (STS) contenue dans ledit paquet d'initialisation de méga-trame (MIP) préalablement reçu ;
- des moyens d'horodatage dudit paquet en fonction de la valeur courante des premier et second compteurs.

Plus généralement, le dispositif d'horodatage selon l'invention comprend des moyens de mise en oeuvre du procédé d'horodatage tel que décrit précédemment (dans l'un quelconque de ses différents modes de réalisation).
L'invention concerne également un procédé d'insertion d'au moins une partie d'un flux de données secondaire dans un flux de données principal, permettant d'obtenir un flux de données résultant devant être diffusé par au moins un émetteur d'un réseau de diffusion, ledit procédé d'insertion comprenant une étape d'horodatage de paquets appliquée à au moins un flux donné appartenant au groupe comprenant ledit flux secondaire et ledit flux principal, et une étape d'insertion du flux secondaire dans le flux principal, en fonction d'informations d'horodatage générées dans ladite étape d'horodatage, chaque flux donné étant organisé en paquets successifs eux-mêmes organisés en au moins une méga-trame, chaque méga-trame comprenant un paquet d'initialisation de méga-trame (MIP).
Selon l'invention, ladite étape d'horodatage de paquets est conforme au procédé d'horodatage décrit précédemment.
Avantageusement, ladite étape d'insertion d'au moins une partie du flux secondaire dans le flux principal comprend les étapes suivantes :

- obtention d'une première information d'horodatage associée à un premier paquet compris dans ledit flux principal ;
- obtention d'une seconde information d'horodatage associée à un second paquet compris dans ledit flux secondaire ;
- détermination de la durée dudit premier paquet, à partir d'une taille déterminée dudit premier paquet et d'un débit déterminé dudit flux principal ;
- insertion dudit second paquet dans ledit flux principal, à la place dudit premier paquet, si : $H1 \leq H2 < H1 + D1$, avec H1 l'heure indiquée par la première information d'horodatage, H2 l'heure indiquée par la seconde information d'horodatage, et D1 la durée du premier paquet.

Selon une caractéristique avantageuse, un tel procédé d'insertion comprend une étape de modification d'un compteur d'horloge de référence initial dudit second paquet, en fonction de H1 et H2, délivrant un compteur d'horloge modifié égal au compteur d'horloge initial plus la différence entre H2 et H1 multipliée par la valeur de l'horloge de référence.

Ainsi, l'invention selon ce mode de réalisation permet de recalculer un compteur d'horloge de référence d'un paquet inséré dans un flux principal, de manière à ce que le compteur d'horloge du flux modifié, après insertion, soit toujours valide.

L'invention concerne également un produit programme d'ordinateur téléchargeable depuis un réseau de communication et/ou stocké sur un support lisible par ordinateur et/ou exécutable par un microprocesseur, comprenant des instructions de code de programme pour la mise en oeuvre des étapes du procédé d'insertion décrit précédemment (dans l'un quelconque de ses différents modes de réalisation), lorsque ledit programme est exécuté sur un ordinateur.

L'invention concerne également un dispositif d'insertion d'au moins une partie d'un flux de données secondaire dans un flux de données principal, permettant d'obtenir un flux de données résultant devant être diffusé par au moins un émetteur d'un réseau de diffusion, ledit dispositif d'insertion comprenant des moyens d'horodatage de paquets s'appliquant à au moins un flux donné appartenant au groupe comprenant ledit flux secondaire et ledit flux principal, et des moyens d'insertion du flux secondaire dans le flux principal, en fonction d'informations d'horodatage générées par lesdits moyens d'horodatage, chaque flux donné étant organisé en paquets successifs eux-mêmes organisés en au moins une méga-trame, chaque méga-trame comprenant un paquet d'initialisation de méga-trame (MIP).

Selon un mode de réalisation de l'invention, lesdits moyens d'horodatage de paquets comprennent un dispositif d'horodatage tel que décrit précédemment.

Plus généralement, le dispositif d'insertion selon l'invention comprend des moyens de mise en oeuvre du procédé d'insertion tel que décrit précédemment (dans l'un quelconque de ses différents modes de réalisation).

## 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 illustre un exemple d'insertion d'une composante d'un flux secondaire dans un flux principal ;
- la figure 2, déjà décrite en relation avec l'art antérieur, présente un réseau SFN selon une première technique de l'art antérieur ;
- la figure 3, déjà décrite en relation avec l'art antérieur, présente un réseau SFN selon une deuxième technique de l'art antérieur ;
- la figure 4, déjà décrite en relation avec l'art antérieur, illustre la structure des méga-trames et des paquets MIP ;
- la figure 5A, déjà décrite en relation avec l'art antérieur, explique la signification du champ « pointer » d'un paquet MIP ;
- la figure 5B, déjà décrite en relation avec l'art antérieur, explique la signification du champ « STS » d'un paquet MIP ;
- la figure 6 présente une machine d'état d'un procédé d'horodatage d'un flux selon un mode de réalisation particulier de l'invention ;
- la figure 7 présente une machine d'état d'un procédé d'insertion selon un mode de réalisation particulier de l'invention ;
- la figure 8 présente un exemple de flux impliqués dans une insertion effectuée selon la machine d'état de la figure 7 ;
- la figure 9 présente un synoptique général d'un réseau SFN dans lequel peuvent être mises en oeuvre les techniques d'horodatage et d'insertion selon un mode de réalisation de l'invention ;
- la figure 10 présente la structure d'un dispositif d'horodatage et d'insertion selon un mode de réalisation particulier de l'invention ;
- la figure 11 présente un exemple d'insertion d'un fichier MPEG-TS dans un flux MPEG-TS selon un mode de réalisation particulier de l'invention.

## 6. DESCRIPTION DÉTAILLÉE

Sur toutes les figures du présent document, les éléments et étapes identiques sont désignés par une même référence numérique.

On présente maintenant, en relation avec la **figure 1**, un exemple d'insertion d'une composante d'un flux secondaire dans un flux principal.

On considère un multiplex DVB-H constitué de services transmis par rafale (« burst » en anglais).

Le flux principal 1 est un multiplex national comprenant :

- deux groupes de services principaux ayant chacun un débit constant : le premier groupe 11 comprend quatre services (Service 1 à Service 4), et le second groupe 12 comprend deux services (Service 5 et Service 6) ;
- des données de bourrage 13 ; et
- des informations de signalisation 14 de type « information spécifique de programme » (« PSI », pour « Program Specific Information » en anglais) ou « information de service » (« SI », pour « Service Information » en anglais).

Le flux secondaire 2 est un multiplex régional comprenant :

- un groupe de services de contribution 21 comprenant deux services locaux (Service C1 et Service C2) ;
- des données de bourrage 23 ; et
- des informations de signalisation 24 de type « PSI » ou « SI ».

Dans cet exemple, l'insertion consiste à remplacer le second groupe 12 de services principaux (Service 5 et Service 6) du multiplex national 1 par le groupe de services de contribution 21 (Service C1 et Service C2) du multiplex régional 2, ayant une bande passante inférieure ou égale.
Ainsi, le flux résultant 3 comprend :

- le premier groupe 11 de services principaux (Service 1 à Service 4) ;
- le groupe de services de contribution 21 (Service C1 et Service C2) ;
- des données de bourrage 33 ; et
- des informations de signalisation 34 de type « PSI » ou « SI ».

Bien qu'il n'y ait pas de notion de rafale, le principe reste identique dans le cas d'un multiplex DVB-T ou autre modulation similaire.

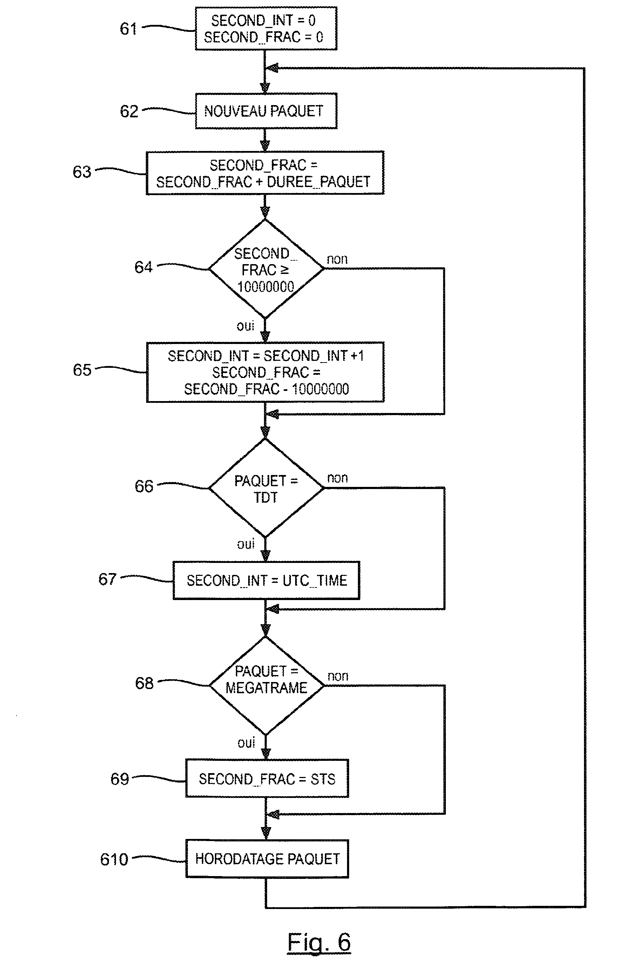

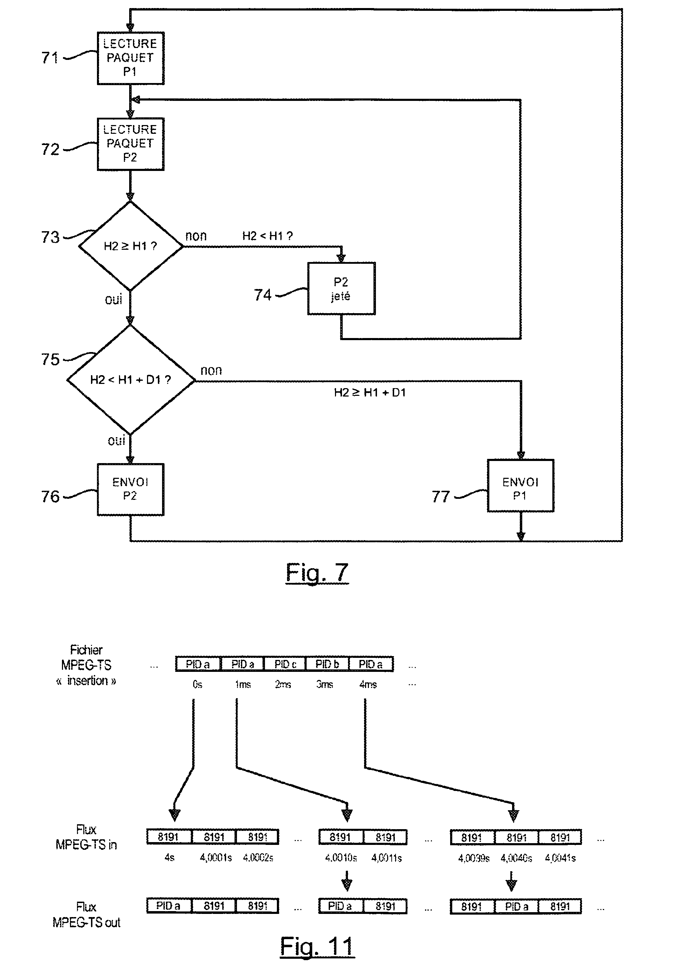

La **figure 6** présente une machine d'état d'un procédé d'horodatage d'un flux selon un mode de réalisation particulier de l'invention. Cette machine d'état de l'horodatage est par exemple appliquée d'une part au flux principal et d'autre part au flux secondaire, afin de permettre l'application de la machine d'état de l'insertion décrite ci-après en relation avec la figure 7. Cette machine d'état de l'horodatage est par exemple mise en oeuvre dans un dispositif d'horodatage et d'insertion (aussi appelé re-multiplexeur par la suite) occupant la même position au sein du réseau que le dispositif d'insertion de l'art antérieur référencé 20 sur la figure 3.
On utilise deux compteurs temporels :

- le compteur SECOND_INT, permettant de compter des secondes ; et
- le compteur SECOND_FRAC, permettant de compter des fractions de seconde. Il est incrémenté au rythme d'une horloge à 10 MHz, de façon à compter des dixièmes de microseconde (ce qui correspond à la granularité avec laquelle le champ STS d'un paquet MIP indique la position en temps du premier paquet de la prochaine méga-trame par rapport à la dernière impulsion 1 PPS de référence précédant le début de cette prochaine méga-trame), avec une valeur maximale égale à $10^7$.

Dans une étape 61, on initialise les compteurs SECOND_INT et SECOND_FRAC à zéro.
Dans une étape 62, on reçoit un nouveau paquet et on détermine sa durée, à partir d'une taille déterminée de ce paquet et d'un débit déterminé du flux considéré (durée paquet = taille paquet / débit).
La taille du paquet est obtenue via le récepteur.
Le débit du flux peut être donné directement par l'exploitant, ou peut être calculé à partir des informations (tps_mip) contenues dans un paquet d'initialisation de méga-trame (MIP) préalablement reçu, selon la formule suivante :

$$débit = \frac{9}{2176} * \frac{bande * modulation * FEC * taille\_paquet}{1 + intervalle\_de\_garde}$$

avec :

- *bande :* la bande passante du canal de transmission du flux, pouvant être de 5, 6, 7 ou 8 MHz ;
- *modulation:* le nombre de bits par porteuse (par exemple 2 bits par porteuse pour une modulation de type QPSK, 4 bits par porteuse pour une modulation de type 16-QAM, 6 bits par porteuse pour une modulation de type 64-QAM, ...) ;
- *FEC :* le rapport donnant le nombre de bits utiles par le nombre de bits transmis ;
- *taille_paquet :* 188 ou 204 octets ;
- *intervalle_de_garde :* la valeur de l'intervalle de garde (1/4, 1/8, 1/16, 1/32, ...).

Dans une étape 63, on incrémente le compteur SECOND_FRAC, avec la durée déterminée du paquet, pour obtenir une valeur incrémentée du compteur SECOND_FRAC.

Dans l'étape 64, on détecte si la valeur incrémentée du compteur SECOND_FRAC est supérieure ou égale à la valeur maximale $10^7$.

En cas de détection négative à l'étape 64, on passe directement à l'étape 66. En cas de détection positive à l'étape 64, on passe à l'étape 65 dans laquelle on réinitialise le compteur SECOND_FRAC avec une nouvelle valeur courante égale à la valeur incrémentée moins la valeur maximale $10^7$. En outre, on incrémente d'une unité le compteur SECOND_INT. Puis on passe à l'étape 66.

Dans l'étape 66, on détecte si le paquet est un paquet transportant une table de date et heure (table TDT). La table TDT est extraite à partir de son identifiant de paquet (PID, pour « Packet Identifier » en anglais) égal à Ox 14 en hexadécimal et de son identifiant de table (table_id) égal à 0x70 en hexadécimal. Cette table TDT contient un champ nommé UTC_time sur 5 octets qui précise la date calendaire (2 octets), ainsi que l'heure (1 octet), les minutes (1 octets) et les secondes (1 octet).

En cas de détection négative à l'étape 66, on passe directement à l'étape 68. En cas de détection positive à l'étape 66, on passe à l'étape 67 dans laquelle on réinitialise le compteur SECOND_INT à une nouvelle valeur courante fonction de l'information temporelle contenue dans le champ UTC_time de la table TDT. Puis on passe à l'étape 68.

Dans l'étape 68, on détecte si le paquet est un premier paquet d'une méga-trame. Cette détection est possible grâce à la détection préalable d'un paquet MIP (les paquets MIP sont détectés en filtrant les paquets avec l'identifiant PID égal à 0x15 en hexadécimal) et la lecture du contenu des champs Pointer et STS de ce paquet MIP. C'est le contenu du champ Pointer qui permet de savoir quand arrivera le prochain premier paquet d'une méga-trame.

En cas de détection négative à l'étape 68, on passe directement à l'étape 610. En cas de détection positive à l'étape 68, on passe à l'étape 69 dans laquelle on réinitialise le compteur SECOND_FRAC à une nouvelle valeur courante égale au contenu du champ STS préalablement lu. Puis on passe à l'étape 610.

Dans l'étape 610, on horodate le paquet en fonction de la valeur courante des compteurs SECOND_INT et SECOND_FRAC.

La **figure 7** présente une machine d'état d'un procédé d'insertion d'un flux secondaire dans un flux principal, selon un mode de réalisation particulier de l'invention. Cette machine d'état de l'insertion est par exemple mise en oeuvre dans un dispositif d'horodatage et d'insertion (aussi appelé re-multiplexeur par la suite) occupant la même position au sein du réseau que le dispositif d'insertion de l'art antérieur référencé 20 sur la figure 3.

On suppose que la machine d'état de l'horodatage, décrite ci-dessus en relation avec la figure 6, a déjà été appliquée d'une part au flux principal et d'autre part au flux secondaire.

Dans une étape 71, on lit un paquet P1 du flux principal et on obtient l'information d'horodatage I1 préalablement associée à ce paquet (par application de la machine d'état de l'horodatage au flux principal). On note H1 l'heure indiquée par cette information d'horodatage I1 (combinaison de la valeur du compteur de secondes SECOND_INT et de la valeur du compteur de fractions de seconde SECOND_FRAC).

Dans une étape 72, on lit un paquet P2 du flux secondaire et on obtient l'information d'horodatage I2 préalablement associée à ce paquet (par application de la machine d'état de l'horodatage au flux secondaire). On note H2 l'heure indiquée par cette information d'horodatage I2 (combinaison de la valeur du compteur de secondes SECOND_INT et de la valeur du compteur de fractions de seconde SECOND_FRAC).

Dans une étape 73, on détecte si la condition « H2 ≥ H1 » est vérifiée.

En cas de détection négative à l'étape 73, on passe à l'étape 74 dans laquelle le paquet P2 du flux secondaire est jeté.

En cas de détection positive à l'étape 73, on passe à l'étape 75 dans laquelle on détecte si la condition « H2 < H1 + D1 » est vérifiée, avec D1 la durée du paquet P1 (déterminée par exemple lors de l'application de la machine d'état de l'horodatage au flux principal).

En cas de détection négative à l'étape 75 (c'est-à-dire si « H2 ≥ H1 + D1 »), on passe à l'étape 77 dans laquelle le paquet P1 du flux principal est envoyé (en d'autres termes, le paquet P2 du flux secondaire n'est finalement pas inséré dans le flux principal à la place du paquet P1).

En cas de détection positive à l'étape 75, on passe à l'étape 76 dans laquelle le paquet P2 du flux secondaire est envoyé (en d'autres termes, le paquet P2 du flux secondaire est finalement inséré dans le flux principal à la place du paquet P1).

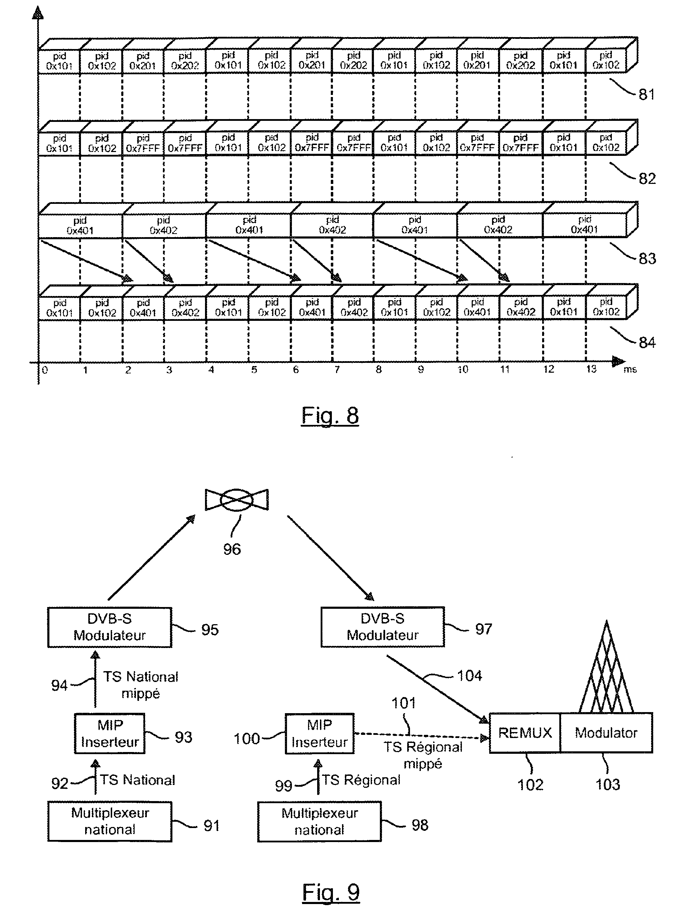

La **figure 8** présente un exemple de flux impliqués dans une insertion effectuée selon la machine d'état de l'insertion de la figure 7.

Dans cet exemple, le flux national d'origine (référencé 81), avant marquage par des paquets de bourrage, a un débit de 1,504 Mbps pour des paquets de 188 octets. La durée d'un paquet est donc : 188 * 8 / 1504000 = 1 ms (selon la formule suivante : durée_paquet = 8 * taille_paquet / débit_flux).

Le flux national après marquage par des paquets de bourrage (référencé 82), a le même débit de 1,504 Mbps. Les paquets de bourrage (ayant l'identifiant de paquet PID 0x7FFF) se substituent aux paquets du flux national ayant les identifiants de paquet PID 0x201 et 0x202 en hexadécimal, c'est-à-dire les paquets du flux national à remplacer par des paquets du flux régional ayant les PID 0x401 et 0x402 en hexadécimal.

Le flux régional (référencé 83) a un débit de 0,752 Mbps pour des paquets de 188 octets. La durée d'un paquet est donc : 188 * 8 / 752000 = 2 ms.

Le flux résultant de l'insertion (référencé 84), aussi appelé flux national re-multiplexé, a le même débit que le flux national d'origine. Les paquets du flux national ayant les PID 0x201 et 0x202 ont été remplacés par les paquets du flux régional ayant les PID 0x401 et 0x402.

Un mode de réalisation particulier de l'invention permet également d'insérer un fichier MPEG-TS préalablement téléchargé dans un flux principal MPEG-TS, comme illustré en **figure 11**. Ce fichier peut être émis une fois, en boucle ou selon une granularité temporelle prédéterminée.

De même que pour un flux MPEG-TS à insérer, une information d'horodatage est calculée, de manière à ce que chaque paquet du fichier soit repéré temporellement, en fonction du débit du flux MPEG-TS.

L'information d'horodatage pour le fichier MPEG-TS est initialisée à 0 pour le premier paquet du fichier, et s'incrémente d'une « durée paquet » à chaque paquet. L'information d'horodatage pour le flux principal MPEG-TS est calculée selon le procédé d'horodatage décrit précédemment.

Le procédé d'insertion selon l'invention est ensuite chargé d'insérer les paquets du fichier toutes les « durées paquet », en ajoutant une différence horaire correspondant à l'information d'horodatage du premier paquet remplacé dans le flux principal.

Par exemple, on considère un fichier MPEG-TS, de débit 1,504 Mbps, découpé en paquet de 188 octets d'une durée de 4 ms, à insérer, si nécessaire, toutes les 1 ms, dans un flux principal de débit 15,04 Mbps, dont les paquets sont essentiellement des paquets de bourrage, d'une durée de 100$\mu$s.

On considère que l'information d'horodatage du premier paquet à remplacer dans le flux principal est égale à 4s, et que le PID des paquets à insérer du fichier MPEG-TS est noté PIDa. Ceux-ci sont donc insérés aux informations d'horodatage suivantes dans le flux MPEG-TS : 4s ; 4,0010s ; 4,0040s ...

La **figure 9** présente un synoptique général d'un réseau SFN dans lequel peuvent être mises en oeuvre les techniques d'horodatage et d'insertion selon un mode de réalisation de l'invention.

Dans ce mode de réalisation, on considère des réseau DVB-H à l'échelle nationale avec des décrochements locaux. Les réseaux DVB-H diffusent sur le même canal à la fois un bouquet de programmes national (commun à l'ensemble du territoire) et un bouquet de programmes régional spécifique à chaque « plaque SFN » (région diffusant le même signal synchronisé). La solution de distribution doit permettre d'éviter de distribuer plusieurs fois le bouquet national en plus des bouquets régionaux.

Dans chaque « plaque SFN », le bouquet national et le bouquet régional sont modulés à partir d'un même flux MPEG-TS résultant. Ce flux MPEG résultant doit être créé avant modulation, localement au niveau de chaque émetteur, grâce à une fonction de re-multiplexage DVB-H local (horodatage et insertion). Cette fonction est basée sur l'utilisation des solutions d'horodatage et d'insertion présentées ci-dessus (en relation avec les figures 6 et 7 respectivement), grâce aux capacités de marquage temporel déterministe du flux national et du flux régional, en vue de leur multiplexage synchrone.

Les deux bouquets (national et régional) sont reçus au niveau du re-multiplexeur sous la forme de deux flux MPEG-TS indépendants pouvant provenir de réseaux de transport variés (satellite, IP...).

Pour respecter les conditions imposées par le fonctionnement en SFN, tous les re-multiplexeurs locaux d'une « plaque SFN » doivent réaliser la même opération au même instant. Leur fonctionnement doit donc être déterministe et synchronisé.

La technique (basée sur l'utilisation des solutions d'horodatage et d'insertion présentées ci-dessus) consiste à remplacer une partie du bouquet national (un ou plusieurs programmes) par le flux régional de débit inférieur ou égal à celui de la partie remplacée. Il est possible pour l'exploitant de choisir les programmes du bouquet national à supprimer et remplacer. Cette technique ne nécessite pas de modifier le flux national en amont (l'insertion utilise le résultat de l'horodatage des flux, cet horodatage utilisant lui-même les tables TDT et les paquets MIP compris dans chaque flux à horodater). Ceci permet la diffusion du flux national sans équipement spécifique sur les sites non équipés du re-multiplexeur selon la présente technique.

Dans l'exemple de la figure 9, un re-multiplexeur 102, placé en amont d'un modulateur 103, reçoit un flux national 104 et un flux régional 101 et insère le flux régional 101 dans le flux national 104 afin de générer un flux résultant modulé par le modulateur 103.

Le flux national 104 reçu par le re-multiplexeur 102 résulte de la chaîne de transmission suivante : un multiplexeur national 91 génère un flux MPEG-TS national d'origine 92 ; un inserteur de MIP 93 insère des paquets MIP dans le flux MPEG-TS national d'origine 92, pour obtenir un flux MPEG-TS national « mippé » 94 ; un modulateur DVB-S 95 module le flux MPEG-TS national « mippé » 94 pour le transmettre à un démodulateur DVB-S 97, via un satellite 96 ; après démodulation, le démodulateur DVB-S 97 obtient le flux national 104 (qui comprend donc des paquets MIP).

Le flux régional 101 reçu par le re-multiplexeur 102 résulte de la chaîne de transmission suivante : un multiplexeur régional 98 génère un flux MPEG-TS régional d'origine 99 ; un inserteur de MIP 100 insère des paquets MIP dans le flux MPEG-TS régional d'origine 99, pour obtenir le flux régional 101 (qui comprend donc des paquets MIP).

Pour permettre à un récepteur de restituer l'horloge de référence d'un service (27 MHz) (par exemple pour calculer le débit du flux reçu), un compteur noté PCR (pour « Program Clock Reference » en anglais), est transmis dans le paquet PID de la table PMT. Le PCR est incrémenté sur des périodes de 27 MHz, et est constitué de deux champs :

- PCR_base : compteur modulo $2^{33}$, incrémenté par périodes de 90 kHz ;
- PCR_extension : compteur modulo 300, incrémenté par périodes de 27 MHz.

On retrouve la valeur du PCR, en période de 27 MHz, avec la formule suivante :

$$PCR = PCR\_base * 300 + PCR\_extension.$$

Lorsqu'un flux secondaire (par exemple un flux régional) est inséré dans un flux principal (par exemple un flux national) de débit différent, le PCR des paquets du flux inséré doit être recalculé.

Pour ce faire, pour un paquet du flux inséré, on considère :

- l'heure $H_{in}$ indiquée par l'information d'horodatage $I_{in}$ associée à ce paquet en entrée (par application de la machine d'état de l'horodatage au flux secondaire),
- l'heure $H_{out}$ indiquée par l'information d'horodatage $I_{out}$ associée à ce paquet après insertion (par application de la machine d'état du procédé d'insertion d'un flux secondaire dans un flux principal).

La différence $\Delta$ entre les heures $H_{in}$ et $H_{out}$ est convertie en période de 27 MHz de la manière suivante :

$$\Delta = (H_{out} - H_{in}) * 27 \text{ MHz}.$$

A partir de cette différence $\Delta$ et du PCR initial du paquet considéré $PCR_{in}$, le PCR à remplacer ($PCR_{out}$) est calculé comme suit :

$$PCR_{out} = PCR_{in} + \Delta,$$

dont les parties « base » et « extension » se calculent de la façon suivante :

$$
\begin{array}{c|c}
PCR_{out} & 300 \\
\hline
PCR_{out}\_extension & PCR_{out}\_base
\end{array}
$$

La **figure 10** présente la structure d'un dispositif d'horodatage et d'insertion (aussi appelé re-multiplexeur) selon un mode de réalisation particulier de l'invention, mettant par exemple en oeuvre les machines d'état de l'horodatage et de l'insertion, décrites ci-dessus en relation avec les figures 6 et 7 respectivement.

Ce dispositif comprend une mémoire RAM 150, une unité de traitement 152, équipée par exemple d'un microprocesseur, et pilotée par un programme d'ordinateur stocké dans une mémoire ROM 151. A l'initialisation, les instructions de code du programme d'ordinateur sont par exemple chargées dans la mémoire RAM 150 avant d'être exécutées par le processeur de l'unité de traitement 152. L'unité de traitement 152 reçoit en entrée le flux principal A et le flux secondaire C. Le microprocesseur de l'unité de traitement 152 horodate chacun des flux A et C et insère le flux secondaire C dans le flux principal A pour obtenir un flux résultant B, selon les instructions de code du programme d'ordinateur chargées dans la mémoire RAM 150. L'unité de traitement 152 délivre en sortie le flux résultant B.

On notera que l'invention ne se limite pas à une implantation purement logicielle, sous la forme d'une séquence d'instructions d'un programme informatique, mais qu'elle peut aussi être mise en oeuvre sous forme matérielle ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé d'horodatage d'un flux de données organisé en paquets successifs eux-mêmes organisés en au moins une méga-trame, chaque méga-trame comprenant un paquet d'initialisation de méga-trame (MIP), ledit procédé étant **caractérisé en ce qu'**il comprend les étapes suivantes, pour chaque paquet dudit flux :

   - détermination de la durée dudit paquet, à partir d'une taille déterminée dudit paquet et d'un débit déterminé dudit flux donné ;
   - si ledit paquet est un paquet transportant une table de date et heure (table TDT), obtention d'une première information temporelle (UTC_time) contenue dans ladite table de date et heure (table TDT) ;
   - si ledit paquet est un premier paquet d'une méga-trame, obtention d'une seconde information temporelle (STS) contenue dans un paquet d'initialisation de méga-trame (MIP) préalablement reçu ;
   - horodatage dudit paquet en fonction de la durée dudit paquet et desdites première et seconde informations temporelles.

2. Procédé selon la revendication 1, **caractérisé en ce que** ladite étape d'horodatage dudit paquet en fonction de la durée dudit paquet et desdites première et seconde informations temporelles comprend les étapes suivantes :

   - incrémentation d'un premier compteur temporel, permettant de compter des fractions de seconde (SECOND_FRAC), avec la durée déterminée dudit paquet, pour obtenir une valeur incrémentée du premier compteur ;
   - si ladite valeur incrémentée du premier compteur est supérieure ou égale à une valeur maximale prédéterminée, réinitialisation du premier compteur avec une nouvelle valeur courante égale à ladite valeur incrémentée moins ladite valeur maximale prédéterminée, et incrémentation d'une unité d'un second compteur temporel (SECOND_INT), permettant de compter des secondes ;
   - si ledit paquet est un paquet transportant une table de date et heure (table TDT), réinitialisation du second compteur temporel à une nouvelle valeur courante fonction de ladite première information temporelle (UTC_time) contenue dans ladite table de date et heure ;
   - si ledit paquet est un premier paquet d'une méga-trame, réinitialisation du premier compteur temporel à une nouvelle valeur courante fonction de ladite seconde information temporelle (STS) contenue dans ledit paquet d'initialisation de méga-trame (MIP) préalablement reçu ;
   - horodatage dudit paquet en fonction de la valeur courante des premier et second compteurs.

3. Procédé selon l'une quelconque des revendications 1 et 2, **caractérisé en ce que** ladite seconde information temporelle est contenue dans un champ « Synchronisation_time_stamp » (STS) dudit paquet d'initialisation de méga-trame (MIP).

4. Procédé selon l'une quelconque des revendications 1 à 3, **caractérisé en ce que** ledit flux est un flux devant être diffusé par au moins un émetteur d'un réseau de diffusion de type SFN, dans lequel chacun desdits émetteurs utilise une même fréquence d'émission des données du flux résultant.

5. Procédé selon l'une quelconque des revendications 1 à 4, **caractérisé en ce que** ledit flux de données est conforme à une norme de radiodiffusion appartenant au groupe comprenant les normes DVB-T, DVB-H, DVB-SH, DTMB et CMMB.

6. Procédé selon l'une quelconque des revendications 2 à 5, **caractérisé en ce que** ledit premier compteur est incrémenté au rythme d'une horloge à 10 MHz, de façon à compter des dixièmes de microseconde, et **en ce que** ladite valeur maximale prédéterminée est égale à $10^7$.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre des étapes du procédé d'horodatage selon au moins une des revendications 1 à 6.

**8.** Dispositif d'horodatage d'un flux de données organisé en paquets successifs eux-mêmes organisés en au moins une méga-trame, chaque méga-trame comprenant un paquet d'initialisation de méga-trame (MIP), ledit dispositif étant **caractérisé en ce qu'**il comprend

- des moyens de détermination de la durée d'un paquet dudit flux, à partir d'une taille déterminée dudit paquet et d'un débit déterminé dudit flux donné ;
- des moyens de détection du type dudit paquet ;
- des premiers moyens d'obtention, activés si lesdits moyens de détection détectent que ledit paquet est un paquet transportant une table de date et heure (table TDT), permettant d'obtenir une première information temporelle (UTC_time) contenue dans ladite table de date et heure (table TDT) ;
- des seconds moyens d'obtention, activés si lesdits moyens de détection détectent que ledit paquet est un premier paquet d'une méga-trame, permettant d'obtenir une seconde information temporelle (STS) contenue dans un paquet d'initialisation de méga-trame (MIP) préalablement reçu ;
- des moyens d'horodatage dudit paquet en fonction de la durée dudit paquet et desdites première et seconde informations temporelles.

**9.** Dispositif selon la revendication 8, **caractérisé en ce que** lesdits moyens d'horodatage dudit paquet en fonction de la durée dudit paquet et desdites première et seconde informations temporelles comprend :

- des moyens d'incrémentation d'un premier compteur temporel, permettant de compter des fractions de seconde (SECOND_FRAC), avec la durée déterminée dudit paquet, pour obtenir une valeur incrémentée du premier compteur ;
- des moyens de comparaison de ladite valeur incrémentée du premier compteur avec une valeur maximale prédéterminée ;
- les moyens suivants, activés si lesdits moyens de comparaison indiquent que ladite valeur incrémentée du premier compteur est supérieure ou égale à ladite valeur maximale prédéterminée :

  * des moyens de réinitialisation du premier compteur avec une nouvelle valeur courante égale à ladite valeur incrémentée moins ladite valeur maximale prédéterminée,
  * des moyens d'incrémentation d'une unité d'un second compteur temporel (SECOND_INT), permettant de compter des secondes ;

- des premiers moyens de réinitialisation, activés si lesdits moyens de détection détectent que ledit paquet est un paquet transportant une table de date et heure (table TDT), permettant de réinitialiser le second compteur temporel à une nouvelle valeur courante fonction de ladite première information temporelle (UTC_time) contenue dans ladite table de date et heure ;
- des seconds moyens de réinitialisation, activés si lesdits moyens de détection détectent que ledit paquet est un premier paquet d'une méga-trame, permettant de réinitialiser le premier compteur temporel à une nouvelle valeur courante fonction de ladite seconde information temporelle (STS) contenue dans ledit paquet d'initialisation de méga-trame (MIP) préalablement reçu ;
- des moyens d'horodatage dudit paquet en fonction de la valeur courante des premier et second compteurs.

**10.** Procédé d'insertion d'au moins une partie d'un flux de données secondaire dans un flux de données principal, permettant d'obtenir un flux de données résultant devant être diffusé par au moins un émetteur d'un réseau de diffusion, ledit procédé d'insertion comprenant une étape d'horodatage de paquets appliquée à au moins un flux donné appartenant au groupe comprenant ledit flux secondaire et ledit flux principal, et une étape d'insertion du flux secondaire dans le flux principal, en fonction d'informations d'horodatage générées dans ladite étape d'horodatage, chaque flux donné étant organisé en paquets successifs eux-mêmes organisés en au moins une méga-trame, chaque méga-trame comprenant un paquet d'initialisation de méga-trame (MIP), ledit procédé d'insertion étant **caractérisé en ce que** ladite étape d'horodatage de paquets est conforme au procédé d'horodatage selon l'une quelconque des revendications 1 à 6.

**11.** Procédé d'insertion selon la revendication 10, **caractérisé en ce que** ladite étape d'insertion d'au moins une partie du flux secondaire dans le flux principal comprend les étapes suivantes :

- obtention d'une première information d'horodatage associée à un premier paquet compris dans ledit flux principal ;
- obtention d'une seconde information d'horodatage associée à un second paquet compris dans ledit flux secondaire ;
- détermination de la durée dudit premier paquet, à partir d'une taille déterminée dudit premier paquet et d'un débit déterminé dudit flux principal ;
- insertion dudit second paquet dans ledit flux principal, à la place dudit premier paquet, si : H1 ≤ H2 < H1 + D1, avec H1 l'heure indiquée par la première information d'horodatage, H2 l'heure indiquée par la seconde information d'horodatage, et D1 la durée du premier paquet.

**12.** Procédé d'insertion selon la revendication 11, **caractérisé en ce qu'**il comprend une étape de modification d'un compteur d'horloge de référence initial dudit second paquet, en fonction de H1 et H2, délivrant un compteur d'horloge modifié égal au compteur d'horloge initial plus la différence entre H2 et H1 multipliée par la valeur de l'horloge de référence.

**13.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre des étapes du procédé d'insertion selon au moins une des revendications 10 à 12.

**14.** Dispositif d'insertion d'au moins une partie d'un flux de données secondaire dans un flux de données principal, permettant d'obtenir un flux de données résultant devant être diffusé par au moins un émetteur d'un réseau de diffusion, ledit dispositif d'insertion comprenant des moyens d'horodatage de paquets s'appliquant à au moins un flux donné appartenant au groupe comprenant ledit flux secondaire et ledit flux principal, et des moyens d'insertion du flux secondaire dans le flux principal, en fonction d'informations d'horodatage générées par lesdits moyens d'horodatage, chaque flux donné étant organisé en paquets successifs eux-mêmes organisés en au moins une méga-trame, chaque méga-trame comprenant un paquet d'initialisation de méga-trame (MIP),
ledit dispositif d'insertion étant **caractérisé en ce que** lesdits moyens d'horodatage de paquets comprennent un dispositif d'horodatage selon l'une quelconque des revendications 8 et 9.

**Claims**

**1.** Method for time stamping a data flow organised into successive packets, which themselves are organised into at least one mega-frame, each mega-frame comprising a mega-frame initialisation packet (MIP), the said method being **characterised in that** it comprises the following steps for each packet of the said flow:

- determination of the duration of the said packet, on the basis of a specific size of the said packet and a specific rate of the said given flow;
- if the said packet is a packet which transports a date and time table (TDT table), obtaining first temporal data (UTC_time) contained in the said date and time table (TDT table);
- if the said packet is a first packet of a mega-frame, obtaining second temporal data (STS) contained in a mega-frame initialisation packet (MIP) previously received; and
- time stamping the said packet depending on the duration of the said packet and the said first and second temporal data.

**2.** Method according to claim 1, **characterised in that** the said step of time stamping of the said packet depending on the duration of the said packet and the said first and second temporal data comprises the following steps:

- incrementation of a first temporal counter which makes it possible to count fractions of a second (SECOND_FRAC), with the specific duration of the said packet, in order to obtain an incremented value of the first counter;
- if the said incremented value of the first counter is equal to, or greater than a maximum predetermined value, re-initialisation of the first counter with a new current value equal to the said incremented value less the said maximum predetermined value, and incrementation by one unit of a second temporal counter (SECOND_INT) which makes it possible to count seconds;
- if the said packet is a packet which transports a date and time table (TDT table), re-initialisation of the second temporal counter to a new current value which is dependent on the said first temporal data (UTC_time) contained in the said date and time table;
- if the said packet is a first packet of a mega-frame, re-initialisation of the first temporal counter to a new current value which is dependent on the said second temporal data (STS) contained in the said mega-frame (MIP) initialisation packet previously received; and

- time stamping of the said packet depending on the current value of the first and second counters.

3. Method according to either of claims 1 and 2, **characterised in that** the said second temporal data is contained in a field "Synchronisation_time_stamp" (STS) of the said mega-frame initialisation packet (MIP).

4. Method according to any one of claims 1 to 3, **characterised in that** the said flow is a flow which must be diffused by at least one emitter of a diffusion network of the SFN type, wherein each of the said emitters uses the same frequency of emission of the resulting flow data.

5. Method according to any one of claims 1 to 4, **characterised in that** the said data flow is in conformity with a radio-broadcasting standard which belongs to the group comprising the standards DVB-T, DVB-H, DVB-SH, DTMB and CMMB.

6. Method according to any one of claims 2 to 5, **characterised in that** the said first counter is incremented at the rhythm of a 10 MHz clock, such as to count tenths of a microsecond, and **in that** the said predetermined maximum value is equal to $10^7$.

7. Computer programme product which can be loaded remotely from a communication network and/or stored on a support which can be read by a computer and/or can be executed by a microprocessor, **characterised in that** it comprises programme code instructions for implementation of the steps of the time stamping method according to at least one of claims 1 to 6.

8. Device for time stamping a data flow organised into successive packets, which themselves are organised into at least one mega-frame, each mega-frame comprising a mega-frame initialisation packet (MIP), the said device being **characterised in that** it comprises:

   - means for determination of the duration of a packet of the said flow, on the basis of a specific size of the said packet and a specific rate of the said given flow;
   - means for detection of the type of the said packet;
   - first obtaining means, which are activated if the said means for detection detect that the said packet is a packet which transports a date and time table (TDT table), which makes it possible to obtain first temporal data (UTC_time) contained in the said date and time table (TDT table);
   - second obtaining means, which are activated if the said means for detection detect that the said packet is a first packet of a mega-frame, which makes it possible to obtain second temporal data (STS) contained in a mega-frame initialisation packet (MIP) previously received;
   - means for time stamping the said packet depending on the duration of the said packet and on the said first and second temporal data.

9. Device according to claim 8, **characterised in that** the said means for time stamping the said packet depending on the duration of the said packet and on the said first and second temporal data comprise:

   - means for incrementation of a first temporal counter which makes it possible to count fractions of a second (SECOND_FRAC) with the specific duration of the said packet in order to obtain an incremented value of the first counter;
   - means for comparison of the said incremented value of the first counter with a maximum predetermined value;
   - the following means, which are activated if the said means for comparison indicate that the said incremented value of the first counter is equal to, or greater than the said maximum predetermined value:

      * means for re-initialisation of the first counter with a new current value equal to the said incremented value less the said predetermined maximum value;
      * means for incrementation by one unit of a second temporal counter (SECOND_INT) which makes it possible to count seconds;

   - first means for re-initialisation which are activated if the said means for detection detect that the said packet is a packet which transports a data and time table (TDT table) which makes it possible to re-initialise the second temporal counter to a new current value which depends on the said first temporal data (UTC_time) contained in the said date and time table:
   - second means for re-initialisation which are activated if the said means for detection detect that the said packet is a first packet of a mega-frame, which makes it possible to re-initialise the first temporal counter to a new current value which depends on the said second temporal data (STS) contained in the said mega-frame initialisation packet (MIP) previously received; and

- means for time stamping the said packet depending on the current value of the said first and second counters.

10. Method for insertion of at least part of a secondary data flow in a main data flow, which makes it possible to obtain a resulting data flow to be broadcasted by at least one emitter of a broadcasting network, the said method for insertion comprising a step of time stamping of packets which is applied to at least one given flow belonging to the group comprising the said secondary flow and the said main flow, and a step of insertion of the secondary flow in the main flow, depending on time stamping data generated in the said time stamping step, each given flow being organised into successive packets which themselves are organised into at least one mega-frame, each mega-frame comprising a mega-frame initialisation packet (MIP), the said method for insertion being **characterised in that** the said step for time stamping of packets is in conformity with the time stamping method according to any one of claims 1 to 6.

11. Method for insertion according to claim 10, **characterised in that** the said step of insertion of at least part of the secondary flow in the main flow comprises the following steps:

- obtaining first time stamping data associated with a first packet contained in the said main flow;
- obtaining second time stamping data associated with a second packet contained in the said secondary flow;
- determination of the duration of the said first packet on the basis of a specific size of the said first packet and a specific rate of the said main flow;
- insertion of the said second packet in the said main flow, in the place of the said first packet, if: $H1 \leq H2 < H1 + D1$, where H1 is the time indicated by the first time stamping data, H2 is the time indicated by the second time stamping data, and D1 is the duration of the first packet.

12. Method for insertion according to claim 11, **characterised in that** it comprises a step of modification of an initial reference clock counter of the said second packet, depending on H1 and H2, thus providing a modified clock counter which is equal to the initial clock counter plus the difference between H2 and H1 multiplied by the value of the reference clock.

13. Computer programme product which can be loaded remotely from a communication network and/or stored on a support which can be read by a computer and/or can be executed by a microprocessor, **characterised in that** it comprises programme code instructions for implementation of the steps of the method for insertion according to at least one of claims 10 to 12.

14. Device for insertion of at least part of a flow of secondary data in a main data flow, which makes it possible to obtain a resulting data flow to be broadcasted by at least one emitter of a broadcasting network, the said device for insertion comprising means for time stamping of packets which is applied to at least one given flow belonging to the group comprising the said secondary flow and the said main flow, and means for insertion of the secondary flow in the main flow, depending on time stamping data generated by the said time stamping means, each given flow being organised into successive packets which themselves are organised into at least one mega-frame, each mega-frame comprising a mega-frame initialisation packet (MIP), the said device for insertion being **characterised in that** the said means for time stamping of packets comprise a time stamping device according to either of claims 8 and 9.

**Patentansprüche**

1. Verfahren zum Zeitstempeln eines Datenstroms, der in aufeinanderfolgenden Paketen organisiert ist, die selbst in mindestens einem Mega-Frame organisiert sind, wobei jeder Mega-Frame ein Mega-Frame Initialisierungs-Paket (MIP) umfasst, wobei das Verfahren **dadurch gekennzeichnet ist, dass** es für jedes Paket des Stroms die folgenden Schritte umfasst:

- Bestimmen der Dauer des Pakets ausgehend von einer bestimmten Größe des Pakets und einer bestimmten Übertragungsgeschwindigkeit des gegebenen Stroms;
- wenn das Paket ein Paket ist, das eine Zeitwert-Tabelle (TDT-Tabelle) transportiert, Gewinnen einer ersten Zeitinformation (UTC_time), die in der Zeitwert-Tabelle (TDT-Tabelle) enthalten ist;
- wenn das Paket ein erstes Paket eines Mega-Frames ist, Gewinnen einer zweiten Zeitinformation (STS), die in einem zuvor empfangenen Mega-Frame Initialisierungs-Paket (MIP) enthalten ist;
- Zeitstempeln des Pakets in Abhängigkeit von der Dauer des Pakets und der ersten und zweiten Zeitinformation.

**2.** Verfahren nach Anspruch 1, **dadurch gekennzeichnet, dass** der Schritt des Zeitstempelns des Pakets in Abhängigkeit von der Dauer des Pakets und der ersten und zweiten Zeitinformation die folgenden Schritte umfasst:

- Erhöhen eines ersten Zeitzählers, der das Zählen von Sekundenbruchteilen (SECOND_FRAC) ermöglicht, mit der bestimmten Dauer des Pakets zum Erhalten eines erhöhten Werts des ersten Zählers;
- wenn der erhöhte Wert des ersten Zählers größer oder gleich einem vorbestimmten Höchstwert ist, Rücksetzen des ersten Zählers mit einen neuen laufenden Wert, der gleich dem erhöhten Wert minus dem vorbestimmten Höchstwert ist, und Erhöhen eines zweiten Zeitzählers (SECOND_INT), der das Zählen von Sekunden ermöglicht, um eine Einheit;
- wenn das Paket ein Paket ist, das eine Zeitwert-Tabelle (TDT-Tabelle) transportiert, Rücksetzen des zweiten Zeitzählers auf einen neuen laufenden Wert in Abhängigkeit von der ersten Zeitinformation (UTC_time), die in der Zeitwert-Tabelle enthalten ist;
- wenn das Paket ein erstes Paket eines Mega-Frames ist, Rücksetzen des ersten Zeitzählers auf einen neuen laufenden Wert in Abhängigkeit von der zweiten Zeitinformation (STS), die im zuvor empfangenen Mega-Frame Initialisierungs-Paket (MIP) enthalten ist;
- Zeitstempeln des Pakets in Abhängigkeit vom laufenden Wert des ersten und zweiten Zählers.

**3.** Verfahren nach einem der Ansprüche 1 und 2, **dadurch gekennzeichnet, dass** die zweite Zeitinformation in einem « Synchronisation_time_stamp » (STS)-Feld des Mega-Frame Initialisierungs-Pakets (MIP) enthalten ist.

**4.** Verfahren nach einem der Ansprüche 1 bis 3, **dadurch gekennzeichnet, dass** der Strom ein Strom ist, der durch mindestens einen Sender eines Verteilnetzes vom Typ SFN zu verteilen ist, in dem jeder der Sender eine selbe Frequenz zum Senden der Daten des resultierenden Stromes verwendet.

**5.** Verfahren nach einem der Ansprüche 1 bis 4, **dadurch gekennzeichnet, dass** der Datenstrom mit einer Rundfunkübertragungsnorm übereinstimmt, die zur Gruppe umfassend die Normen DVB-T, DVB-H, DVB-SH, DTMB und CMMB gehört.

**6.** Verfahren nach einem der Ansprüche 2 bis 5, **dadurch gekennzeichnet, dass** der erste Zähler im Takt eines 10 MHz-Taktgebers derart erhöht wird, dass Zehntel Mikrosekunden gezählt werden, und dadurch, dass der vorbestimmte Höchstwert gleich $10^7$ ist.

**7.** Computerprogrammprodukt, das von einem Nachrichtennetz heruntergeladen und/oder auf einem maschinenlesbaren Datenträger gespeichert und/oder durch einen Mikroprozessor ausgeführt werden kann, **dadurch gekennzeichnet, dass** es Programmcodebefehle zur Durchführung der Schritte des Zeitstempelungsverfahrens nach einem der Ansprüche 1 bis 6 umfasst.

**8.** Vorrichtung zur Zeitstempelung eines Datenstroms, der in aufeinanderfolgenden Paketen organisiert ist, die selbst in mindestens einem Mega-Frame organisiert sind, wobei jeder Mega-Frame ein Mega-Frame Initialisierungs-Paket (MIP) umfasst, wobei die Vorrichtung **dadurch gekennzeichnet ist, dass** sie Folgendes umfasst:

- Mittel zur Bestimmung der Dauer eines Pakets des Stroms ausgehend von einer bestimmten Größe des Pakets und einer bestimmten Übertragungsgeschwindigkeit des gegebenen Datenstroms;
- Mittel zur Ermittlung des Typs des Pakets;
- erste Gewinnungsmittel, die aktiviert werden, wenn die Ermittlungsmittel ermitteln, dass das Paket ein Paket ist, das eine Zeitwert-Tabelle (TDT-Tabelle) transportiert, und die Gewinnung einer ersten Zeitinformation (UTC_time) ermöglichen, die in der Zeitwert-Tabelle (TDT-Tabelle) enthalten ist;
- zweite Gewinnungsmittel, die aktiviert werden, wenn die Ermittlungsmittel ermitteln, dass das Paket ein erstes Paket eines Mega-Frames ist, und die Gewinnung einer zweiten Zeitinformation (STS) ermöglichen, die in einem zuvor empfangenen Mega-Frame Initialisierungs-Paket (MIP) enthalten ist;
- Mittel zur Zeitstempelung des Pakets in Abhängigkeit von der Dauer des Pakets und der ersten und zweiten Zeitinformation.

**9.** Vorrichtung nach Anspruch 8, **dadurch gekennzeichnet, dass** die Mittel zur Zeitstempelung des Pakets in Abhängigkeit von der Dauer des Pakets und der ersten und zweiten Zeitinformation Folgendes umfassen:

- Mittel zum Erhöhen eines ersten Zeitzählers, der das Zählen von Sekundenbruchteilen (SECOND_FRAC) ermöglicht, mit der bestimmten Dauer des Pakets zum Erhalten eines erhöhten Werts des ersten Zählers;
- Mittel zum Vergleichen des erhöhten Werts des ersten Zählers mit einem vorbestimmten Höchstwert;
- die folgenden Mittel, die aktiviert werden, wenn die Vergleichsmittel angeben, dass der erhöhte Wert des ersten Zählers größer oder gleich dem vorbestimmten Höchstwert ist:

   * Mittel zum Rücksetzen des ersten Zählers mit einem neuen laufenden Wert, der gleich dem erhöhten Wert minus dem vorbestimmten Höchstwert ist,
   * Mittel zum Erhöhen eines zweiten Zeitzählers (SECOND_INT), der das Zählen von Sekunden ermöglicht, um eine Einheit;

- erste Mittel zum Rücksetzen, die aktiviert werden, wenn die Ermittlungsmittel ermitteln, dass das Paket ein Paket ist, das eine Zeitwert-Tabelle (TDT-Tabelle) transportiert, und die das Rücksetzen des zweiten Zeitzählers auf einen neuen laufenden Wert in Abhängigkeit von der ersten Zeitinformation (UTC_time) ermöglichen, die in der Zeitwert-Tabelle enthalten ist;
- zweite Mittel zum Rücksetzen, die aktiviert werden, wenn die Ermittlungsmittel ermitteln, dass das Paket ein erstes Paket eines Mega-Frames ist, und die das Rücksetzen des ersten Zeitzählers auf einen neuen laufenden Wert in Abhängigkeit von der zweiten Zeitinformation (STS) ermöglichen, die in dem zuvor empfangenen Mega-Frame Initialisierungs-Paket (MIP) enthalten ist;
- Mittel zum Zeitstempeln des Pakets in Abhängigkeit von dem laufenden Wert des ersten und zweiten Zählers.

10. Verfahren zum Einfügen von zumindest einem Abschnitt eines Nebendatenstroms in einen Hauptdatenstrom, das das Erhalten eines resultierenden Datenstroms ermöglicht, der durch mindestens einen Sender eines Verteilnetzes zu verteilen ist, wobei das Einfügungsverfahren einen Schritt des Zeitstempelns von Paketen, der auf mindestens einen gegebenen Strom aus der Gruppe umfassend den Nebenstrom und den Hauptstrom angewandt wird, und einen Schritt des Einfügens des Nebenstroms in den Hauptstrom in Abhängigkeit von Zeitstempelinformationen umfasst, die während des Zeitstempelungsschritts erzeugt werden, wobei jeder gegebene Strom in aufeinanderfolgenden Paketen organisiert ist, die selbst in mindestens einem Mega-Frame organisiert sind, wobei jeder Mega-Frame ein Mega-Frame Initialisierungs-Paket (MIP) umfasst, wobei das Einfügungsverfahren **dadurch gekennzeichnet ist, dass** der Schritt des Zeitstempelns von Paketen mit dem Zeitstempelungsverfahren nach einem der Ansprüche 1 bis 6 übereinstimmt.

11. Einfügungsverfahren nach Anspruch 10, **dadurch gekennzeichnet, dass** der Schritt des Einfügens von mindestens einem Abschnitt des Nebenstroms in den Hauptstrom die folgenden Schritte umfasst:

   - Gewinnen einer ersten Zeitstempelinformation, die einem ersten Paket zugehörig ist, das in dem Hauptstrom enthalten ist;
   - Gewinnen einer zweiten Zeitstempelinformation, die einem zweiten Paket zugehörig ist, das in dem Nebenstrom enthalten ist;
   - Bestimmen der Dauer des ersten Pakets ausgehend von einer bestimmten Größe des ersten Pakets und einer bestimmten Übertragungsgeschwindigkeit des Hauptstroms;
   - Einfügen des zweiten Pakets in den Hauptstrom anstelle des ersten Pakets, wenn: $H1 \leq H2 < H1 + D1$,
   wobei H1 die durch die erste Zeitstempelinformation angegebene Zeit, H2 die durch die zweite Zeitstempelinformation angegebene Zeit und D1 die Dauer des ersten Pakets ist.

12. Einfügungsverfahren nach Anspruch 11, **dadurch gekennzeichnet, dass** es einen Schritt des Änderns eines Anfangsbezugstaktzählers des zweiten Pakets in Abhängigkeit von H1 und H2 umfasst, wodurch ein geänderter Taktzähler geliefert wird, der gleich dem Anfangstaktzähler plus der Differenz zwischen H2 und H1, multipliziert mit dem Wert des Bezugstakts ist.

13. Computerprogrammprodukt, das von einem Nachrichtennetz heruntergeladen und/oder auf einem maschinenlesbaren Datenträger gespeichert und/oder durch einen Mikroprozessor ausgeführt werden kann, **dadurch gekennzeichnet, dass** es Programmcodebefehle zur Durchführung der Schritte des Einfügungsverfahrens nach mindestens einem der Ansprüche 10 bis 12 umfasst.

14. Vorrichtung zur Einfügung von mindestens einem Abschnitt eines Nebendatenstroms in einen Hauptdatenstrom, die das Erhalten eines resultierenden Datenstroms ermöglicht, der durch mindestens einen Sender eines Verteilnetzes zu verteilen ist, wobei die Einfügungsvorrichtung Mittel zur Zeitstempelung von Paketen, die auf mindestens einen gegebenen Strom aus der Gruppe umfassend den Nebenstrom und den Hauptstrom angewandt werden, und Mittel zum Einfügen des Nebenstroms in den Hauptstrom in Abhängigkeit von Zeitstempelinformationen umfassen, die durch die Zeitstempelungsmittel erzeugt werden, wobei jeder gegebene Strom in aufeinanderfolgenden Paketen organisiert ist, die selbst in mindestens einem Mega-Frame organisiert sind, wobei jeder Mega-Frame ein Mega-Frame Initialisierungs-Paket (MIP) umfasst,
wobei die Einfügungsvorrichtung **dadurch gekennzeichnet ist, dass** die Mittel zur Zeitstempelung von Paketen eine Zeitstempelungsvorrichtung nach einem der Ansprüche 8 und 9 umfassen.

Fig. 1

Fig. 2

Fig. 3

Fig. 4

Méga trame M-1        Méga trame M        Méga trame M+1

Paquet n | Paquet 1 | Paquet 2    MIP    Paquet n | Paquet 1 | Paquet 2

pointer

## Fig. 5A

signal 1 PPS

signal à la sortie
du MIP inserteur

STS1

méga trame 1     méga trame 2

STS2

## Fig. 5B

152

A

C

B

150

151

## Fig. 10

61 — SECOND_INT = 0
SECOND_FRAC = 0

62 — NOUVEAU PAQUET

63 — SECOND_FRAC =
SECOND_FRAC + DUREE_PAQUET

64 — SECOND_
FRAC ≥
10000000    non

oui

65 — SECOND_INT = SECOND_INT +1
SECOND_FRAC =
SECOND_FRAC - 10000000

66 — PAQUET =
TDT    non

oui

67 — SECOND_INT = UTC_TIME

68 — PAQUET =
MEGATRAME    non

oui

69 — SECOND_FRAC = STS

610 — HORODATAGE PAQUET

Fig. 6

## Fig. 7

## Fig. 11

| pid 0x101 | pid 0x102 | pid 0x201 | pid 0x202 | pid 0x101 | pid 0x102 | pid 0x201 | pid 0x202 | pid 0x101 | pid 0x102 | pid 0x201 | pid 0x202 | pid 0x101 | pid 0x102 |
|---|---|---|---|---|---|---|---|---|---|---|---|---|---|

~81

| pid 0x101 | pid 0x102 | pid 0x7FFF | pid 0x7FFF | pid 0x101 | pid 0x102 | pid 0x7FFF | pid 0x7FFF | pid 0x101 | pid 0x102 | pid 0x7FFF | pid 0x7FFF | pid 0x101 | pid 0x102 |
|---|---|---|---|---|---|---|---|---|---|---|---|---|---|

~82

| pid 0x401 | pid 0x402 | pid 0x401 | pid 0x402 | pid 0x401 | pid 0x402 | pid 0x401 |
|---|---|---|---|---|---|---|

~83

| pid 0x101 | pid 0x102 | pid 0x401 | pid 0x402 | pid 0x101 | pid 0x102 | pid 0x401 | pid 0x402 | pid 0x101 | pid 0x102 | pid 0x401 | pid 0x402 | pid 0x101 | pid 0x102 |
|---|---|---|---|---|---|---|---|---|---|---|---|---|---|

~84

0  1  2  3  4  5  6  7  8  9  10  11  12  13  ms

## Fig. 8

## Fig. 9

**RÉFÉRENCES CITÉES DANS LA DESCRIPTION**

**Documents brevets cités dans la description**

- FR 2902591